# EUROPÄISCHE PATENTANMELDUNG

(11) **EP 3 012 800 A1**
(43) Veröffentlichungstag der Anmeldung: **27.04.2016**
(21) Anmeldenummer: 15002524.5
(22) Anmeldetag: 26.08.2015
(51) Int. Cl.: G06Q 50/06

(54) **VERFAHREN ZUR BESTIMMUNG DER UNTERJÄHRIG DURCH EINE BESTIMMTE ENERGIENUTZUNGSART VERBRAUCHTEN PRIMÄRENERGIE EINER LIEGENSCHAFT**

(30) Priorität: 23.10.2014 DE 102014015616
(71) Anmelder: ista International GmbH, 45131 Essen (DE)
(72) Erfinder: ADICK, Jörn, 44263 Dortmund (DE); MESSERSCHMIDT, Jürgen, 34314 Espenau (DE)
(74) Vertreter: Cohausz Hannig Borkowski Wißgott

(57) **Zusammenfassung**

Die Erfindung betrifft ein Verfahren zur Bestimmung der unterjährig durch eine bestimmte Energienutzungsart, insbesondere der durch Raumbeheizung und/oder Warmwasserbereitung verbrauchten Primärenergie einer Liegenschaft, wobei ein den Gesamtprimärenergieverbrauch einer Liegenschaft in einem ersten Zeitintervall, insbesondere zeitlich zurückliegenden Zeitintervall repräsentierendes Verbrauchsmaß, insbesondere das verbrauchte Volumen eines Energieträgers erfasst wird, bevorzugt mittels eines Primärenergieverbrauchszählers eine Gesamtprimärenergieverbrauchszahl der gesamten Liegenschaft für die bestimmte Energienutzungsart in einer gewählten Einheit gebildet wird direkt durch das Verbrauchsmaß selbst oder durch Anwendung wenigstens einer Umrechnungsvorschrift auf das Verbrauchsmaß für die der bestimmten Energienutzungsart zugeordneten Zählvorrichtungen der Liegenschaft, insbesondere für die elektronischen Heizkostenverteiler oder die Warmwasserzähler der Liegenschaft, aus der Gesamtprimärenergieverbrauchszahl der bestimmten Energienutzungsart ein Zählvorrichtungs-spezifischer Energiefaktor berechnet wird, der ein Verhältnis darstellt zwischen den Zähleinheiten, welche diese Zählvorrichtungen der Liegenschaft zur Erfassung des Energieverbrauchs der bestimmten Energienutzungsart summieren und der Primärenergie in der gewählten Einheit für ein zweites, insbesondere späteres Zeitintervall, die in dem zweiten Zeitintervall summierten Zähleinheiten wenigstens einer Zählvorrichtung mit dem Energiefaktor multipliziert werden und so der mit der wenigstens einen Zählvorrichtung summierte Energieverbrauch in eine Maßzahl, insbesondere ein Vielfaches der gewählten Einheit umgerechnet wird.

## Beschreibung

Die Erfindung betrifft ein Verfahren zur Bestimmung der unterjährig durch eine bestimmte Energienutzungsart verbrauchten Primärenergie einer Liegenschaft. Insbesondere ist es vorgesehen, das Verfahren derart durchzuführen, dass die von einem bestimmten Nutzer bzw. durch eine bestimmte Wohneinheit einer Liegenschaft unterjährig durch Raumbeheizung und/oder Warmwassernutzung verbrauchte Primärenergie bestimmt wird.

Im Stand der Technik ist es bekannt, den Verbrauch von Primärenergie einer Liegenschaft, d. h. also den Verbrauch eines bestimmten Energieträgers, wie beispielsweise Gas oder Öl innerhalb bestimmter Abrechnungsperioden zu erfassen und die durch den Verbrauch entstandenen Kosten auf die Nutzer einer Liegenschaft umzulegen. Die Abrechnung erfolgt hierbei im Wesentlichen auf einer jährlichen Basis.

Diese Abrechnungsmethodik ist etabliert und gesetzeskonform, hat jedoch den Nachteil, dass die Nutzer, aber auch die Verwaltungen von Liegenschaften lediglich im Jahresturnus Informationen über die Kosten erhalten, die für eine bestimmte Energienutzungsart, z.B. die Raumbeheizung oder die Erwärmung von Warmwasser und dessen Verbrauch entstanden sind. Eine Anpassung des Nutzerverhaltens oder auch Änderungen an einer Liegenschaft, die eine Verbrauchsverringerung nach sich ziehen würden, können demnach ebenso allenfalls im Jahresturnus vorgenommen werden.

Beispielsweise erhält ein Verwalter durch Vergleich der aktuellen Verbrauchswerte mit den Vorjahreswerten bei einer starken Erhöhung der Werte einen Hinweis auf einen eventuellen Defekt in der Heizungsanlage, der jedoch dementsprechend spät erkannt wird und demnach während der gesamten zurückliegenden Abrechnungsperiode zu einer Erhöhung der Kosten beigetragen hat.

Ebenso werden die Nutzer auf ein eventuelles verschwenderisches Verhalten, z.B. bei der Raumbeheizung oder beim Warmwasserverbrauch erst dann aufmerksam gemacht, wenn die Abrechnungsperiode abgelaufen ist und die Nutzer beispielsweise im Vergleich zu einem Vorjahreszeitraum eine deutlich höhere Abrechnung über die jeweiligen Kosten erhalten, als sie eventuell erwartet wurde.

Bekannt ist es z.B. einen Verbrauch von Wärmeenergie einer bestimmten Energienutzunsgart, z.B. für die Raumbeheizung oder Warmwasserbeheizung, durch geeichte Wärmemengenzähler als Zählvorrichtung zu erfassen, wobei die grundsätzliche Möglichkeit besteht, unmittelbar für jeden Wärmemengenzähler an diesem die in einem interessierenden Zeitintervall verbrauchte Wärmeenergie abzulesen, insbesondere unmittelbar in Kilowattstunden. Hier müsste sich ein Nutzer oder ein Hausverwalter jedoch dann üblicherweise in den Keller einer Liegenschaft oder an die sonstige Erfassungsstelle begeben und die Werte am Wärmemengenzähler ablesen, wofür auch dessen Bedienung bekannt sein müsste. Ein solches Vorgehen ist somit aufwendig und kaum praktizierbar.

Desweiteren werden solche Wärmemengenzähler trotz ihrer grundsätzlichen Eignung zur geeichten Energiezählung häufig nur eingesetzt, um die Kosten für eine Energienutzungsart in Relation aller Nutzer zueinander zu verteilen. Dies liegt unter anderem daran, dass aufgrund nicht vermeidbarer Energieverluste die tatsächlich verbrauchte Energie in der Regel höher ist als die Summe aller durch solche Wärmemengenzähler gezählten Energiewerte.

In den meisten Fällen der heutigen Liegenschaftsausrüstung, besonders in Mietwohnungen, werden in den einzelnen Wohneinheiten einer Liegenschaft zum Zweck der Abrechung der Kosten der Raumbeheizung an den Heizflächen sog. Heizkostenverteiler als Zählvorrichtungen eingesetzt, welche die abgegebenen Wärmemengen durch Summierung von Zähleinheiten erfassen, insbesondere im Wesentlichen dimensionslos, d.h. ohne Bezug auf eine konkrete physikalische Einheit. Solche insbesondere elektronischen Heizkostenverteiler sind durch DIN-Normungen geregelt und dem Fachmann hinlänglich bekannt.

Hierbei sehen die entsprechenden gesetzlichen Regulierungen vor, dass in einer Liegenschaft die einzelnen Wohneinheiten bzw. darin angeordnete Heizflächen alle mit denselben, d.h. bauartidentischen Heizkostenverteilern ausgestattet sind, bzw. zumindest mit Geräten, die aufgrund einer Eichung gleiches Zählverhalten aufweisen. Dies gilt auch für andere Zählvorrichtungen.

Weiterhin werden in Wohnungen einer Liegenschaft auch Zählvorrichtungen für den Warmwasserverbrauch eingesetzt, die im Wesentlichen nur das Volumen von durchflossenem, also verbrauchtem Warmwasser in Kubikmetern erfassen, um die Kosten für die Warmwasserbereitung auf die Nutzer umzulegen. Durch Ablesen kann zwar der volumetrische Warmwasserverbrauch durch den Nutzer jederzeit ermittelt werden, jedoch keine Information erhalten werden über die für die konkreten Warmwassernutzung verbrauchte Primärenergie.

Mit solchen Zählvorrichtungen, wie beispielsweise Heizkostenverteilern, Wärmemengenzählern oder Warmwasserzählern, welche die Verbräuche an Energie einer bestimmten Energienutzungsart der einzelnen Nutzer einer Liegenschaft nur zueinander in Relation setzen, besteht prinzipbedingt keine unmittelbare Möglichkeit, einen konkreten Verbrauch von Primärenergie für die bestimmte Energienutzungsart, z.B. für die Raumbeheizung und / oder die Warmwassernutzung bzw. den Warmwasserverbrauch erkennbar zu machen und somit beispielsweise Einfluss auf das Nutzerverhalten auszuüben.

Es ist somit eine Aufgabe der Erfindung, ein Verfahren bereitzustellen, mit dem auch unterjährig, d.h. bevorzugt in Zeitintervallen kleiner als eine jährliche Abrechnungsperiode die in einer Liegenschaft durch eine bestimmte Energienutzungsart, bevorzugt alle verschiedenen Energienutzungsarten, wie beispielsweise die Raumbeheizung und / oder Warmwassernutzung jeweils verbrauchte Primärenergie zuverlässig, d. h. mit zumindest hinreichender Genauigkeit ermittelt werden kann. Eine bevorzugte Aufgabe ist es auch, die verbrauchte Primärenergie Nutzer-individuell zu ermitteln, also die Primärenergie für die bestimmte Energienutzungsart, die konkret auf einen individuellen Nutzer oder dessen Wohneinheit in der Liegenschaft entfällt.

Gemäß der Erfindung wird diese Aufgabe dadurch gelöst, dass in einem ersten Schritt ein den Gesamtprimärenergieverbrauch einer Liegenschaft in einem ersten Zeitintervall repräsentierendes Verbrauchsmaß erfasst wird. Dieser Gesamtprimärenergieverbrauch bzw. das Verbrauchsmaß kann, sofern mehrere verschiedene Energienutzungsarten in der Liegenschaft durch dieselbe Primärenergieart abgedeckt werden, ggfs. die auf die einzelnen Nutzungsarten entfallenden Primärenergieverbräuche in Summe umfassen.

Eine Erfassung dieses Verbrauchsmaßes kann beispielsweise mittels eines Verbrauchszählers vorgenommen werden, der beispielsweise in einer Liegenschaft installiert ist oder der zumindest für die Lieferung eines Energieträgers zur Liegenschaft zum Einsatz kommt.

Zum Beispiel wird regelmäßig bei Heizungen, die mit Gas betrieben werden, der Gasverbrauch mittels eines Volumenzählers erfasst. Bei der Betankung von Heizöltanks kommen ebenso an den Tankfahrzeugen entsprechende Zähler zum Einsatz, die das abgegebene Ölvolumen erfassen. Verbrauchszähler kommen des Weiteren auch bei Fernwärmeleitungen zum Einsatz.

Das Verbrauchsmaß kann insbesondere bei einer zentralen Warmwasserbereitung auch durch einen Wärmemengenzähler bereitgestellt werden, die die verbrauchte Energiemenge, insbesondere die zur Wassererwärmung verwendete Energiemenge direkt geeicht zählt.

Das hier genannte erste Zeitintervall kann besonders bevorzugt ein zeitlich zurückliegendes Zeitintervall sein und sich in beispielhafter Anwendung auch decken mit der üblichen Abrechnungsperiode, die für den zugelieferten Energieträger verwendet wird.

Beispielsweise kann es sich also bei dem genannten ersten Zeitintervall um ein zurückliegendes Abrechnungsjahr handeln, das nicht zwingend das Kalenderjahr sein muss, aber kann.

Die Beschränkung auf ein Jahr ist ebenso nicht zwingend, grundsätzlich können erfindungsgemäß auch kleinere erste Zeitintervalle herangezogen werden.

Wenngleich das Verfahren in dem vorbeschriebenen ersten Schritt fordert, dass eine Erfassung des vorgenannten Verbrauchsmaßes vorgenommen wird und dieses bevorzugt durch einen Dienstleister erfolgt, der das Verfahren zur Bestimmung der unterjährig durch die bestimmte Energienutzungsart verbrauchten Primärenergie anbietet, bedeutet dies nicht zwingend, dass das Verbrauchsmaß durch diesen Dienstleister selbst messtechnisch ermittelt wird.

Zwar kann es grundsätzlich vorgesehen sein, eine Messvorrichtung in einer Liegenschaft anzuordnen, z.B. durch den Dienstleister, wobei diese Messvorrichtung den Verbrauch des Primär-Energieträgers messtechnisch bestimmt, z.B. durch einen Wärmemengenzähler, insbesondere der die insgesamt in einer Heizungsanlage verbrauchte Energie misst oder nur den Teil der auf Raumbeheizung und/oder Warmwasserbereitung entfällt.

Eine Ausgestaltung des Verfahrens kann es jedoch auch vorsehen, dass durch einen dritten Dienstleister, z. B. denjenigen, der den Energieträger zu Verfügung stellt, wie oftmals die Stadtwerke, die messtechnische Bestimmung des Verbrauchsmaßes erfolgt und die Erfassung dieses Verbrauchsmaßes zum Zwecke der erfindungsgemäßen Verfahrensdurchführung durch eine Mitteilung, gegebenenfalls durch elektronische Kommunikation oder auch lediglich schriftlich, an den Servicedienstleister erfolgt, der das erfindungsgemäße Verfahren durchführt, beispielsweise mit seinen Datenverarbeitungsanlagen.

Diesem Servicedienstleister kann demnach in einer Ausgestaltung des Verfahrens lediglich eine Zahl als Verbrauchsmaß, z.B. durch die Stadtwerke übermittelt werden, wie beispielsweise das in dem ersten Zeitintervall verbrauchte Gas- oder Ölvolumen bzw. die damit einhergehende verbrauchte Energie in Kilowattstunden. Sofern der Service-Dienstleister, der das erfindungsgemäße Verfahren anbietet, selbst die Meßtechnik, insbesondere einen oder Wärmemengenzähler zur Ermittelung des Verbrauchsmaßes bereitstellt kann es vorgesehen sein, dass dieser das Verbrauchsmaß durch elektronische Kommunikation an einen Server des Dienstleister übersendet, insbesondere an denjenigen Server, der die Verfahrenschritte der Erfindung zumindest zum Teil durchführt.

Gemäß einem weiteren Verfahrensschritt ist es vorgesehen, dass eine Gesamtprimärenergieverbrauchszahl der bestimmten, d.h. hier interessierenden Energienutzungsart, wie z.B. für die Raumbeheizung oder den Warmwasserverbrauch oder sonstige Energienutzung der gesamten Liegenschaft in einer gewählten Einheit, z.B. physikalischen Einheit oder auch anderen Einheit gebildet wird und zwar entweder direkt durch das Verbrauchsmaß selbst oder durch Anwendung wenigstens einer bevorzugt gespeicherten Umrechnungsvorschrift auf das Verbrauchsmaß.

Wird beispielsweise als physikalische Einheit die Energie, beispielsweise in Kilowattstunden gewählt, so kann es vorgesehen sein, dass das Verbrauchsmaß, welches beispielsweise lediglich ein Volumen des verbrauchten Energieträgers repräsentiert, umgerechnet wird durch den spezifischen Energieinhalt des verwendeten Energieträgers pro Volumeneinheit.

Ist das Verbrauchsmaß beispielsweise durch Zulieferung von den Stadtwerken oder in Energieeinheiten geeichte Erfassung direkt in Energieeinheiten angegeben, so bedarf es beispielsweise keiner Umrechnung.

Weiterhin bedarf es auch keiner Umrechnung, sofern das Verbrauchsmaß zwar in einer Volumeneinheit angegeben ist, die Gesamtprimärverbrauchszahl jedoch in seiner weiteren Verwendung ebenso in Volumeneinheiten statt in Energieeinheiten betrachtet werden soll.

So besteht demnach verfahrensgemäß grundsätzlich die Möglichkeit, dass der Anbieter des Verfahrens als Einheit der Gesamtprimärenergieverbrauchszahl jegliche Einheit, bevorzugt eine physikalische Einheit, wie die Energieeinheit oder die Volumeneinheit oder auch eine monetäre Einheit wählt, die durch das erfasste Verbrauchsmaß entweder direkt vorgegeben ist oder sich durch Umrechnung hieraus ergibt.

Sofern in einer Liegenschaft der Gesamtprimärenergieverbrauch ausschließlich nur auf die interessierende Energienutzungsart, z.B. die Raumbeheizung entfällt, bedarf es neben einer eventuellen Einheitenkonversion keiner weiteren Umrechnung, da sich die Gesamtprimärenergieverbrauchszahl der bestimmten, interessierenden Energienutzungsart somit dann unmittelbar aus dem erfassten Verbrauchsmaß ergibt bzw. daraus berechnen lässt.

Oftmals wird jedoch in einer Liegenschaft mit dem Primärenergieträger wie beispielsweise Gas oder Öl nicht nur eine einzige Art der Energienutzung, wie z.B. nur die Raumbeheizung vorgenommen, sondern auch noch wenigstens eine weitere Art der Energienutzung durchgeführt, wie z.B. eine Brauchwassererwärmung.

Eine Bestimmung der Gesamtprimärenergieverbrauchszahl der bestimmten, z.B. nur interessierenden Energienutzungsart, wie beispielsweise der Raumbeheizung oder der Warmwassernutzung kann demnach beispielsweise durch Berücksichtigung einer Quote erfolgen, gemäß welcher der Gesamtprimärenergieverbrauch auf die verschiedenen Energienutzungsarten, wie die Raumbeheizung und die Brauchwassererwärmung jeweils aufzuteilen ist.

Hierfür kann eine Quote bestimmt werden durch Quotientenbildung der Zähleinheitensumme aller Zählvorrichtungen der Liegenschaft, die für die bestimmte Energienutzungsart verwendet werden und der Zähleinheitensumme aller Zählvorrichtungen der Liegenschaft, die für die wenigstens eine weitere Energienutzungsart verwendet werden, insbesondere sofern die jeweiligen Zählvorrichtungen zum relativen Umlegen der Kosten zwischen den Nutzern verwendet werden.

Durch Anwendung dieser Quote auf das ermittelte Verbrauchsmaß des Gesamtprimärenergieverbrauches, ggfs. nach Einheitenkonversion kann die Gesamtenergieverbrauchszahl ermittelt werden, die nur auf die bestimmte Energienutzungsart entfallen ist innerhalb des ersten Zeitintervalls.

Alternativ kann es vorgesehen sein, dass in einem Fall, wenn die Erfassung des Verbrauchs an Energie für eine Energienutzungsart, z.B. die Warmwasserbereitung mittels Wärmemengenzählern, insbesondere eines zentralen Wärmemengenzählers erfolgt, die mit einem solchen Wärmemengenzähler geeicht gezählte Wärmemenge von dem in Energieeinheiten angegebenen Verbrauchsmaß (ggfs. nach Einheitenkonversion) des Gesamtprimärenergieverbrauches der Liegenschaft in Abzug gebracht wird, so dass sich als Differenz lediglich die Gesamtprimärenergieverbrauchszahl der bestimmten, interessierenden Energienutzungsart, z.B. für die Raumbeheizung ergibt.

Sofern keine Energiezählung bei der Warmwasserbereitung durch Wärmemengenzähler vorgesehen ist, kann es auch vorgesehen sein, einen vereinbarten Verteilerschlüssel heranzuziehen, um die für die Wassererwärmung verwendete Primärenergie zu bestimmen und sodann diesen Wert vom Gesamtprimärenergieverbrauch bzw. dem ermittelten Verbrauchsmaß abzuziehen.

Allgemein wird die Gesamtenergieverbrauchszahl für die bestimmte, insbesondere die in der Verfahrensdurchführung ausschließlich interessierende Energienutzungsart bestimmt durch Subtraktion aller nicht interessierenden Energieverbräuche von dem Gesamtenergieverbrauch. Selbstverständlich ist dabei auf übereinstimmende (physikalische) Einheiten der jeweilige Energieverbrauchszahlen zu achten.

Sofern entweder unmittelbar aus dem Verbrauchsmaß die Gesamtprimärenergieverbrauchszahl der bestimmten, interessierenden Energienutzungsart gegeben ist oder durch eine Umrechnung, insbesondere eine gequotelte Aufteilung der auf verschiedene Nutzungsarten anfallenden Energieverbräuche z.B. zwischen Brauchwassererwärmung und Raumbeheizung oder durch die genannte allgemeine Subtraktion bestimmt ist, sieht das Verfahren weiterhin vor, dass für diejenigen Zählvorrichtungen der Liegenschaft, die der bestimmten Energienutzungsart zugeordnet sind, wie z.B. für die elektronischen Heizkostenverteiler bei der Raumbeheizung oder Warmwasserzähler bei der Warmwassernutzung aus der Gesamtprimärenergieverbrauchszahl der bestimmten Energienutzungsart ein Zählvorrichtungs-spezifischer Energiefaktor berechnet wird, der ein Verhältnis darstellt zwischen den Zähleinheiten, welche die Zählvorrichtungen der Liegenschaft zur Erfassung des Energieverbrauches dieser bestimmten Energienutzungsart (z.B. bei Heizkostenverteilern an einer jeweils zugeordneten Heizfläche) summieren und der Primärenergie in der gewählten Einheit.

Dabei muss diese gewählte Einheit, insbesondere physikalische Einheit nicht zwingend "Kilowattstunden" entsprechen. Wie bereits vorangehend genannt, kann als Einheit beispielsweise auch eine Volumeneinheit des Energieträgers verwendet werden oder aber auch eine Kosteneinheit in einer gewünschten Währung. Auch der Begriff "Energiefaktor" soll nicht fälschlicherweise suggerieren, dass eine später damit durch Multiplikation gebildete Zahl in einer physikalisch korrekten Energieeinheit angegeben ist, sondern nur, dass diese Zahl ein Repräsentant verbrauchter Energie ist, nämlich in der gewählten Einheit

Durch diesen erfindungsgemäßen Schritt werden die Zähleinheiten von Zählvorrichtungen, wie z.B. Heizkostenverteilern oder Warmwasserzählern oder auch Wärmemengenzählern, die üblicherweise nur herangezogen werden, um in Abrechnungen die relative Aufteilung der Kosten zwischen den verschiedenen Nutzern vorzunehmen, zur Primärenergie in Relation gesetzt.

Erfindungsgemäß ergibt sich hierdurch eine direkte Zuordnung einer einzelnen Zähleinheit einer Zählvorrichtung einer bestimmten Energienutzungsart zu einem Primärenergieverbrauch für die bestimmte Energienutzungsart in der eingangs genannten, insbesondere gewählten Einheit.

Konkret kann es für die Bestimmung des Energiefaktors vorgesehen sein, die Summe zu bilden aus den Zähleinheiten aller Zählvorrichtungen für die bestimmte Energienutzungsart der gesamten Liegenschaft, die diese während des ersten Zeitintervalles gezählt haben und diese Gesamtsumme zu dividieren durch die Gesamtprimärenergieverbrauchszahl dieser bestimmten Energienutzungsart, die ebenfalls diesem ersten Zeitintervall zugeordnet ist.

In einem weiteren erfindungsgemäßen Schritt ist es nun vorgesehen, dass für ein zweites Zeitintervall, insbesondere ein auf eine vorherige Abrechnungsperiode später folgendes Zeitintervall die in dem zweiten Zeitintervall summierten Zähleinheiten wenigstens einer Zählvorrichtung, z.B. eines Heizkostenverteilers oder Warmwasserzählers oder Wärmemengenzählers mit dem Zählvorrichtungsspezifischen Energiefaktor multipliziert werden und so der mit der wenigstens einen Zählvorrichtung in diesem zweiten Zeitintervall durch Zähleinheiten-Summation erfasste Energieverbrauch in eine Maßzahl, insbesondere in ein Vielfaches oder ggfs. auch einen Bruchteil der eingangs genannten gewählten Einheit umgerechnet wird.

So kann für jede gezählte Einheit einer jeden in einer Liegenschaft verbauten Zählvorrichtung (z.B. Heizkostenverteilers, Warmwasserzähler, Wärmemengenzähler) auf der Basis dieses bestimmten Energiefaktors eine Maßzahl für die durch die bestimmte Nutzungsart, z.B. an der Heizfläche eines Heizkostenverteilers oder durch Warmwassernutzung verbrauchte Energie in der gewählten Einheit bestimmt werden.

Erfindungsgemäß kann es vorgesehen sein, dass zweite insbesondere spätere Zeitintervall kürzer zu wählen als das erste Zeitintervall, welches beispielsweise einer jeweiligen Abrechnungsperiode entsprechen kann. Erfindungsgemäß ist der Beginn des zweiten Zeitintervalls zeitlich immer nach Ende des ersten Zeitintervalls gewählt.

Beispielsweise kann das zweite Zeitintervall auf einen Monat oder auf eine Woche ggf. auch einen Tag beschränkt werden, um den Verbrauch an Primärenergie in diesem gewählten zweiten Zeitintervall für einen oder mehrere beliebige oder für jede Zählvorrichtung bestimmen zu können. So ergibt sich erfindungsgemäß die Möglichkeit, den Verbrauch an Primärenergie für die bestimmte Energienutzungsart, wie beispielsweise die Raumbeheizung oder den Warmwasserverbrauch oder die Warmwasserbereitung unterjährig auf der Basis zurückliegender Abrechnungswerte mit hoher Genauigkeit abzuschätzen.

Das zweite Zeitintervall muss keine feste Länge haben, es kann z.B. fortgeschrieben werden, also einen festen Anfang aber fortlaufendes Ende haben, z.B. bis zu einem Neuanfang, beispielsweise nach erfolgter Jahresabrechnung.

Die Erfindung kann in einer Ausgestaltung vorsehen, die genannte Maßzahl beispielsweise zu berechnen für die gesamte Liegenschaft durch Summenbildung der in dem zweiten Intervall von allen der bestimmten Energienutzungsart zugeordneten Zählvorrichtungen der Liegenschaft summierten Zähleinheiten und Multiplikation dieses Summenwertes mit dem Energiefaktor.

So kann unterjährig bezogen auf die Länge des zweiten Zeitintervalls der gesamte Primärenergieverbrauch, der für die bestimmten Energienutzungsart aufgewendet wurde, in der gewählten Einheit für die gesamte Liegenschaft bestimmt werden. Beispielsweise ergibt sich hierdurch die Möglichkeit, dass eine Hausverwaltung den Primärenergieverbrauch der Liegenschaft im gewählten zweiten Intervall vergleicht mit einem Vergleichswert, z.B. mit einem korrespondierenden Verbrauchswert eines vorangegangenen anderen Zeitintervalls, beispielsweise desselben Monats oder derselben Woche oder desselben Tages im Vorjahr.

Eine Ausführung kann auch vorsehen, dass die Maßzahl berechnet wird für eine von mehreren Wohneinheiten der Liegenschaft durch Summenbildung der im zweiten Intervall von allen Zählvorrichtungen für die bestimmte Energienutzungsart nur der jeweiligen Wohneinheit summierten Zähleinheiten und Multiplikation dieses Summenwertes mit dem Energiefaktor. Sollte für die bestimmte Energienutzungsart nur eine einzige Zählvorrichtung der betrachteten Wohneinheit vorgesehen sein, wie dies z.B. oftmals bei Wärmemengenzählern für die Raumbeheizung der Fall ist, so wird entsprechend nur deren gezählte Summe an Zähleinheiten herangezogen.

So wird hierdurch exakt diejenige verbrauchte Primärenergie bestimmt, die für die betrachtete Energienutzungsart, z.B. die Raumbeheizung lediglich der betrachteten Wohneinheit in dem genannten zweiten Intervall angefallen ist. Es besteht so die Möglichkeit, dass der Nutzer einer Wohneinheit z. B. ein Mieter sein Heizverhalten z. B. mit Vorjahreswerten vergleichen kann.

Weiterhin kann es vorgesehen sein, das Maß zu berechnen für einen Raum einer Wohneinheit einer Liegenschaft, durch Summenbildung der in dem zweiten Intervall von allen Zählvorrichtungen nur des jeweiligen Raumes summierten Zähleinheiten und Multiplikation des Summenwertes mit dem Energiefaktor. Dementsprechend kann der Primärenergieverbrauch lediglich dieses betrachteten Raumes in dem genannten zweiten Intervall abgeschätzt werden. Sollte für die bestimmte Energienutzungsart in dem betrachteten Raum nur eine einzige Zählvorrichtung vorgesehen sein, wie dies z.B. oftmals bei Heizkostenverteilern der Fall, wenn im Raum nur eine Heizfläche angeordnet ist, so wird entsprechend nur deren gezählte Summe an Zähleinheiten herangezogen.

Letztendlich besteht auch die Möglichkeit, das Verfahren so auszugestalten, dass die Maßzahl berechnet wird für eine einzige beliebige Zählvorrichtung, z.B. Heizkostenverteiler, Wasserzähler oder Wärmemengenzähler durch Multiplikation der nur von dieser einen Zählvorrichtung in dem zweiten Intervall summierten Zähleinheiten mit dem Energiefaktor.

Insbesondere kann das Verfahren vorsehen, dass die Bestimmung der Maßzahl für jede Zählvorrichtung individuell erfolgt und für alle Zählvorrichtungen einer Liegenschaft die entsprechende Maßzahl berechnet und gespeichert wird, z.B. auch an die Zählvorrichtung kommuniziert wird, z.B. für Ablesezwecke.

Für eine Hausverwaltung besteht so die Möglichkeit, Zählvorrichtungen zu gruppieren, z. B. nach Wohneinheiten oder nach anderen Kriterien, wie z. B. alle Heizkostenverteiler einer Etage, um so für individuell betrachtete mehrere Zählvorrichtungen die verbrauchte Primärenergie zu bestimmen und ggfs. mit Vergleichswerten zu vergleichen.

Das Verfahren kann vorsehen, dass automatisch oder durch individuelle Initiierung die summierten Zähleinheiten wenigstens einer Zählvorrichtung, z.B. eines Heizkostenverteilers, insbesondere die Zähleinheiten, die nur in dem zweiten Intervall summiert wurden und bevorzugt die Zähleinheiten aller Zählvorrichtungen durch Datenfernübertragung insbesondere über ein Funknetzwerk an einen Server eines Dienstleisters übermittelt werden und durch den Server für die wenigstens eine Zählvorrichtung, insbesondere für wenigstens eine Gruppe von Zählvorrichtungen und bevorzugt für die Zählvorrichtungen wenigstens eines Nutzers oder wenigstens einer Wohneinheit die Maßzahl berechnet und gespeichert wird.

Neben der beschriebenen Berechnung der Maßzahl kann das Verfahren auch vorsehen, dass ein Verhältnis einer berechneten Maßzahl wenigstens einer Zählvorrichtung oder bevorzugt einer Gruppe von Zählvorrichtungen berechnet wird zu beispielsweise einer berechneten Maßzahl wenigstens einer anderen Zählvorrichtung, bevorzugt wenigstens einer anderen Gruppe von Zählvorrichtungen oder zu einem Mittelwert von Maßzahlen anderer Zählvorrichtungen, bevorzugt anderer Gruppen von Zählvorrichtungen oder zu einer Maßzahl derselben Zählvorrichtung, bevorzugt derselben Gruppe von Zählvorrichtungen, die in einem früheren Zeitintervall berechnet wurde.

So kann beispielsweise ein Nutzer aber auch ein Hausverwalter durch diese Verhältnisberechnungen Vergleiche anstellen, der Primärenergieverbräuche zwischen verschiedenen Zählvorrichtungen bzw. Gruppen bzw. innerhalb derselben Zählvorrichtungen oder Gruppen mit den entsprechenden Maßzahl-Werten anderer Zeitintervalle, wie den korrespondierenden Vorjahreswerten. Neben dieser konkreten genannten Verhältnisberechnung besteht ebenso die Möglichkeit, weitere statistische Auswertungen der jeweils ermittelten Maßzahlen vorzusehen.

Das Ergebnis eines Vergleiches kann automatisch visualisiert werden, so dass ein Nutzer über seinen Status im Vergleich informiert wird, z.B. im Vergleich zum Vorjahr oder einem früheren Zeitraum oder auch im Vergleich zu anderen Nutzern oder Wohneinheiten.

Ein wesentlicher Vorteil der Erfindung wird erreicht, wenn eine berechnete Maßzahl und/oder ein berechnetes Verhältnis oder damit einhergehende statistische Auswertungen, insbesondere eine für einen Nutzer oder eine Wohneinheit berechneten Maßzahl oder Verhältnis an ein Kommunikationsendgerät, wie beispielsweise ein Kommunikationsendgerät eines Nutzers einer Wohneinheit kommuniziert und zur Anzeige gebracht wird. Beispielsweise kann es hier vorsehen, dass ein Nutzer insbesondere ein Mieter oder Eigentümer einer Wohneinheit sich an einem Webinterface des eingangs genannten Servers des Dienstleisters anmeldet und hier eine für seine Wohnung oder einen oder mehrere der Zählvorrichtungen einer Wohnung berechnete Maßzahl für ein betrachtetes zweites Zeitintervall abruft, z.B. um diese Maßzahl sodann mit seinen eigenen historisch zurückliegenden Maßzahlwerten zu vergleichen oder aber auch mit den insbesondere anonymisierten Maßzahlen anderer Nutzer.

Auch kann es vorgesehen sein, dass im Rahmen einer automatischen Zulieferung periodische Kommunikationsmitteilungen an ein Kommunikationsendgerät z.B. eines der Nutzer erfolgen, wie zum Beispiel E-Mail-Mitteilungen oder Mitteilungen per SMS z.B. an ein Mobiltelefon oder in eine laufende Applikation auf einem sogenannten Smartphone.

So kann auch hier beispielsweise ein Nutzer über sein Kommunikationsgerät die Maßzahlwerte seiner Wohneinheit und ggf. nach Anonymisierung anderer Wohneinheiten in Erfahrung bringen und ggf. sein Nutzerverhalten bezüglich der Beheizung seiner Wohneinheit anpassen.

Die vorgenannten Berechnungen können dabei vollständig auf einem Server des eingangs genannten Service-Dienstleisters vorgenommen werden.

Auch kann der Server z.B. lediglich nur den Energiefaktor bestimmen und diesen an wenigstens ein Anzeigegerät in einer (jeweiligen) Wohn- oder Nutzeinheit kommunizieren, z.B. per Funk. An dem Anzeigegerät kann dann die jeweilige Wohneinheiten- oder Nutzerspezifische Berechnung der verbrauchten Primärenergie für die bestimmte Energienutzung vorgenommen werden durch Multiplikation dieses zur Verfügung gestellten Faktors mit den in der Wohneinheit summierten Zähleinheiten der dortigen für die bestimmte Energienutzung vorgesehenen Zählvorrichtung(en), insbesondere welche die Zähleinheiten nicht nur an den Server des Servicedienstleiters kommunizieren, sondern insbesondere auch an das Anzeigegerät.

Eine andere Ausführung kann vorsehen, dass jede Zählvorrichtung, z.B. Heizkostenverteiler, Warmwasserzähler oder Wärmemengenzähler den Energiefaktor kommuniziert bekommt vom Server des Dienstleisters und jede Zählvorrichtung selbst den auf ihn entfallenden Primärenergieverbrauch, bzw. dessen Maßzahl oder ein Vergleichsergebnis für das gewählte zweite Zeitintervall berechnet und zur Anzeige bringt.

Besonders über die vorbeschriebenen Kommunikationswege besteht die Möglichkeit, dass ein Nutzer unterjährig z.B. monatlich, wöchentlich oder in einem vom Nutzer gewünschten, sich periodisch wiederholenden oder auch einem gestarteten und fortlaufenden zweiten Zeitintervall die Informationen über die eine oder mehrere Maßzahlen seiner einen oder mehreren Zählvorrichtungen in Erfahrung bringt.

Insbesondere kann so ein Nutzer seine auf das zweite Zeitintervall bezogenen Energieverbrauchswerte beispielsweise in Kilowattstunden in Erfahrung bringen sowie auch in anderen Einheiten, z. B. in Kubikmeter oder Litern bei Gas bzw. Ölverbräuchen oder auch unmittelbar in einer Kosteneinheit, wie beispielsweise eines konkreten Euro-Wertes.

Die Durchführung des erfindungsgemäßen Verfahrens setzt voraus, dass sich in einem zeitlichen Bereich zwischen dem ersten genannten Zeitintervall und dem zweiten zeitlichen Intervall keine wesentlichen Änderungen an der Liegenschaft ergeben haben, wie beispielsweise Modernisierungsmaßnahmen durch Austausch eines Heizkessels oder durch verbesserte Isolationen.

Sofern solche Maßnahmen erfolgen, kann das erfindungsgemäße Verfahren vorsehen, den Zählvorrichtungs-spezifischen Energiefaktor neu zu berechnen auf der Basis eines nach einer Änderungsmaßnahme folgenden neuen ersten Zeitintervalls.

Hierbei besteht nicht zwingend die Notwendigkeit eine vollständige Abrechnungsperiode, wie beispielsweise ein Abrechnungsjahr abzuwarten, sondern es kann sodann eine unterjährige Zwischenerfassung des Gesamtprimärenergieverbrauchs der Liegenschaft erfolgen.

Wichtig ist in diesem Fall ebenso wie allgemein zu den vorbeschriebenen Fällen, dass der Zählvorrichtungs-spezifische Energiefaktor berechnet wird auf der Basis der Gesamtprimärenergieverbrauchszahl der bestimmten Energienutzungsart innerhalb des betrachteten ersten Zeitintervalls und der Gesamtsumme der Zähleinheiten aller Zählvorrichtungen der Liegenschaft, die in demselben ersten Zeitintervall zur Erfassung des Energieverbrauches durch diese Nutzungsart summiert wurden.

Allgemein kann es die Erfindung vorsehen, zwecks Berücksichtigung eventueller zwischenzeitlicher Umbau- und Modernisierungsmaßnahmen einer Liegenschaft oder auch zum Zweck der sonstigen Aktualisierung, dass das erfindungsgemäße Verfahren hinsichtlich des bzw. der Schritte der Bestimmung des Energiefaktors periodisch wiederholt wird unter periodischer Neufestlegung erster Zeitintervalle, aus denen heraus der spezifische Energiefaktor bestimmt wird.

Beispielsweise kann demnach die Erfindung vorsehen, monatlich oder vierteljährlich oder in einem anderen Turnus den spezifischen Energiefaktor neu zu bestimmen und zwischen den Neubestimmungszeitpunkten den ermittelten spezifischen Energiefaktor für die Berechnungen der Primärenergieverbräuche bzw. repräsentierenden Maßzahlen zu verwenden.

Zumindest kann es vorgesehen sein, den Energiefaktor mit jeder Abrechnungsperiode des Primärenergieträgers neu zu berechnen.

Sofern in einer Liegenschaft mehrere verschiedene Arten der Energienutzung vorliegen, insbesondere unter Nutzung desselben Energieträgers, wie es z.B. bei der gleichzeitigen Raumbeheizung und Warmwasserbereitung mit derselben Heizanlage der Fall ist, kann die Erfindung vorsehen, dass der genannte Energiefaktor für alle verschiedenen Arten der Zählvorrichtungen bestimmt wird, die jeweils für eine bestimmte Nutzungsart eingesetzt werden, also z.B. für Heizkostenverteiler und für Warmwasserzähler. So kann ein Nutzer Information über unterjährige Primärenergieverbräuche bzgl. aller seiner Energienutzungsarten erhalten.

## Patentansprüche

1. Verfahren zur Bestimmung der unterjährig durch eine bestimmte Energienutzungsart, insbesondere der durch Raumbeheizung und/oder Warmwasserbereitung verbrauchten Primärenergie einer Liegenschaft, **dadurch gekennzeichnet, dass**
a. ein den Gesamtprimärenergieverbrauch einer Liegenschaft in einem ersten Zeitintervall, insbesondere zeitlich zurückliegenden Zeitintervall repräsentierendes Verbrauchsmaß, insbesondere das verbrauchte Volumen eines Energieträgers erfasst wird, bevorzugt mittels eines Primärenergieverbrauchszählers
b. eine Gesamtprimärenergieverbrauchszahl der gesamten Liegenschaft für die bestimmte Energienutzungsart in einer gewählten Einheit gebildet wird direkt durch das Verbrauchsmaß selbst oder durch Anwendung wenigstens einer Umrechnungsvorschrift auf das Verbrauchsmaß
c. für die der bestimmten Energienutzungsart zugeordneten Zählvorrichtungen der Liegenschaft, insbesondere für die elektronischen Heizkostenverteiler oder die Warmwasserzähler der Liegenschaft, aus der Gesamtprimärenergieverbrauchszahl der bestimmten Energienutzungsart ein Zählvorrichtungs-spezifischer Energiefaktor berechnet wird, der ein Verhältnis darstellt zwischen den Zähleinheiten, welche diese Zählvorrichtungen der Liegenschaft zur Erfassung des Energieverbrauchs der bestimmten Energienutzungsart summieren und der Primärenergie in der gewählten Einheit
d. für ein zweites, insbesondere späteres Zeitintervall, die in dem zweiten Zeitintervall summierten Zähleinheiten wenigstens einer Zählvorrichtung mit dem Energiefaktor multipliziert werden und so der mit der wenigstens einen Zählvorrichtung summierte Energieverbrauch in eine Maßzahl, insbesondere ein Vielfaches der gewählten Einheit umgerechnet wird.

2. Verfahren nach Anspruch 1, **dadurch gekennzeichnet, dass** die Maßzahl berechnet wird für:
a. die gesamte Liegenschaft durch Summenbildung der in dem zweiten Intervall von allen Zählvorrichtungen der bestimmten Energienutzungsart summierten Zähleinheiten und Multiplikation des Summenwertes mit dem Energiefaktor
b. eine von mehreren Wohneinheiten der Liegenschaft, durch Summenbildung der in dem zweiten Intervall von allen Zählvorrichtungen nur der jeweiligen Wohneinheit summierten Zähleinheiten und Multiplikation des Summenwertes mit dem Energiefaktor
c. einen Raum einer Wohneinheit der Liegenschaft, durch Summenbildung der in dem zweiten Intervall von allen Zählvorrichtungen nur des jeweiligen Raumes summierten Zähleinheiten und Multiplikation des Summenwertes mit dem Energiefaktor
d. eine Zählvorrichtung, insbesondere einen Heizkostenverteiler oder Warmwasserzähler durch Multiplikation der nur von dieser Zählvorrichtung in dem zweiten Intervall summierten Zähleinheiten mit dem Energiefaktor.

3. Verfahren nach einem der vorherigen Ansprüche, **dadurch gekennzeichnet, dass** automatisch oder durch individuelle Initiierung die summierten Zähleinheiten, insbesondere die in dem zweiten Intervall summierten Zähleinheiten wenigstens einer Zählvorrichtung , bevorzugt aller Zählvorrichtungen der bestimmten Energienutzungsart durch Datenfernübertragung, insbesondere über ein Funknetzwerk an einen Server eines Dienstleisters übermittelt werden und durch den Server für die wenigstens eine Zählvorrichtung, insbesondere für wenigstens eine Gruppe von Zählvorrichtungen, insbesondere Gruppe von Heizkostenverteilern, bevorzugt für die Zählvorrichtungen, insbesondere Heizkostenverteiler wenigstens eines Nutzers oder wenigstens einer Wohneinheit die Maßzahl berechnet und gespeichert wird.

4. Verfahren nach einem der vorherigen Ansprüche, **dadurch gekennzeichnet, dass** ein Verhältnis einer berechneten Maßzahl wenigstens einer Zählvorrichtung, bevorzugt einer Gruppe von Zählvorrichtungen, insbesondere Gruppe von Heizkostenverteilern berechnet wird zu
a. einer berechneten Maßzahl wenigstens einer anderen Zählvorrichtung, bevorzugt wenigstens einer anderen Gruppe von Zählvorrichtungen, insbesondere Heizkostenverteilern oder
b. zu einem Mittelwert von Maßzahlen anderer Zählvorrichtungen, , bevorzugt anderer Gruppen von Zählvorrichtungen oder
c. zu einer Maßzahl derselben Zählvorrichtung, bevorzugt derselben Gruppe von Zählvorrichtungen, die in einem früheren Zeitintervall berechnet wurde.

5. Verfahren nach einem der vorherigen Ansprüche, **dadurch gekennzeichnet, dass** eine berechnete Maßzahl und/oder ein berechnetes Verhältnis , insbesondere eine für einen Nutzer oder eine Wohneinheit berechnete Maßzahl oder Verhältnis an ein Kommunikationsendgerät kommuniziert und zur Anzeige gebracht wird.
